# EUROPEAN PATENT APPLICATION

(11) **EP 2 719 610 A1**
(43) Date of publication of application: **16.04.2014**
(21) Application number: 13186339.1
(22) Date of filing: 27.09.2013
(51) Int. Cl.: B62J 11/00

(54) **Support device for helmets**

(30) Priority: 27.09.2012 ES 201230990 U
(71) Applicant: Ogazon Rivera, Cristina, 08006 Barcelona (ES)
(72) Inventor: Ogazon Rivera, Cristina, 08006 Barcelona (ES)
(74) Representative: Carpintero Lopez, Francisco

(57) **Abstract**

The present invention relates to a support device for helmets, comprising a locking element (10) fixing a helmet on a frame (1), and characterized in that it comprises a rod (2) assembled in an articulated manner in the frame (1), said locking element (10) being coupled at the end of said rod (2) farthest away from the frame (1), and in that said rod (2) can pivot with respect to the frame (1) between a use position, in which said rod (2) is in a substantially perpendicular position with respect to the frame (1), and a rest position, in which said rod (2) is placed longitudinally on said frame (1).

It allows simply and comfortably securing a helmet to a frame of a vehicle, such as a bicycle. Furthermore, it causes no discomfort for the rider when the bicycle is being used because it projects very little with respect to the frame in its rest position.

## Description

The present invention relates to a support device for helmets, particularly to a device for fixing a helmet to a vehicle, such as a bicycle.

### Background of the Invention

The use of bicycles is increasingly more common in cities for moving around in short distances as an alternative to motorcycles or automobiles. The use of a bicycle has an obvious advantage from the environmental and economic viewpoints because it does not require fuel.

For the sake of safety, cyclists are advised to wear a helmet to protect themselves against possible blows to the head, and wearing a helmet is mandatory on city streets, just as it is for driving motorcycles.

To promote using bicycles, in some cities there are public or private short-term bicycle rental services, such that a user can pick up a bicycle at one point of the city and return it at a different point after making the desired trip.

In these cases, if a helmet must mandatorily be worn, the user himself/herself would have to take a helmet along with him/her, with the corresponding discomfort this would be. This drawback would also be similar in the case of privately owned bicycles.

Therefore, one objective of the present invention is to provide a support device that allows comfortably fixing the helmet to a bicycle, such that said helmet cannot be removed from the bicycle in an unauthorized manner.

An additional objective of the present invention is to provide a support device that allows fixing different sized helmets to a bicycle.

### Description of the Invention

Said drawbacks are solved with the support device for helmets of the invention, having other advantages that will be described below.

The support device for helmets comprises a locking element fixing a helmet on a frame and is characterized in that it comprises a rod assembled in an articulated manner in the frame, said locking element being coupled at the end of said rod farthest away from the frame, and in that said rod can pivot with respect to the frame between a use position, in which said rod is in a substantially perpendicular position with respect to the frame, and a rest position, in which said rod is placed longitudinally on said frame.

As a result of this feature, a helmet can simply and comfortably be secured to a frame of a vehicle, such as a bicycle. Furthermore, the support device of the present invention causes no discomfort for the rider when the bicycle is used because it projects very little with respect to the frame in its rest position.

Said rod is advantageously housed in a longitudinally sliding manner inside a body, such that the length of the rod with respect to the frame can be adapted to helmets with different measurements.

According to a preferred embodiment, said rod comprises a piston at its end closest to the frame and said body comprises an upper cover provided with a hole for the passage of said rod, a spring being arranged around said rod between said piston and said upper cover. According to this embodiment, the spring forces the rod to be in its least extended position in its rest position, but it could be extended to the length needed in order to adapt to the helmet to be secured.

The support device for helmets of the present invention also preferably comprises an anchor element for securing the helmet in combination with said locking element. Said anchor element allows securing said helmet to the frame of the bicycle.

According to a preferred embodiment, said anchor element comprises a housing for said rod when it is placed in its rest position and side projections for being in contact with the inner surface of the helmet.

The main body is preferably attached to the frame by means of a clamp coupled to the frame and a pivot shaft coupled to an end of said body, and said locking element is housed in a hole envisaged at the end of the rod farthest away from the frame.

Said rod advantageously comprises a guiding pin that is coupled with a guiding groove envisaged in said upper cover, which allows fixing the rod in its maximally extended position.

### Brief Description of the Drawings

To better understand the foregoing a set of drawings is attached in which a practical embodiment has been schematically depicted as a non-limiting example.
Figure 1 is a perspective view of the support device of the present invention in its rest position;
Figure 2 is a partially sectioned perspective view of the support device of the present invention in an intermediate position, where all its elements can be seen;
Figures 3 and 4 are perspective views of the process of locking the support device of the present invention, in which the lock is placed in its locking position; and
Figure 5 is a perspective view of the support device of the present invention in its position, with the helmet fixed to a bicycle.

### Description of a Preferred Embodiment

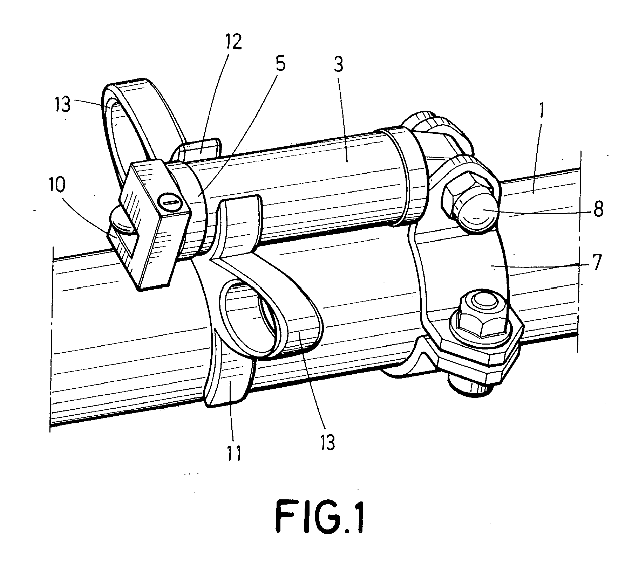

Figure 1 shows the support device of the present invention in its rest position on a frame 1 of a bicycle or of any suitable vehicle, such as a motorcycle. In this position, as can be seen in the drawing, the support device barely projects from said frame 1, such that it does not interfere with riding the bicycle.

The support device for helmets of the present invention comprises three parts: an anchor element 11, a body 3 and a clamp 7.

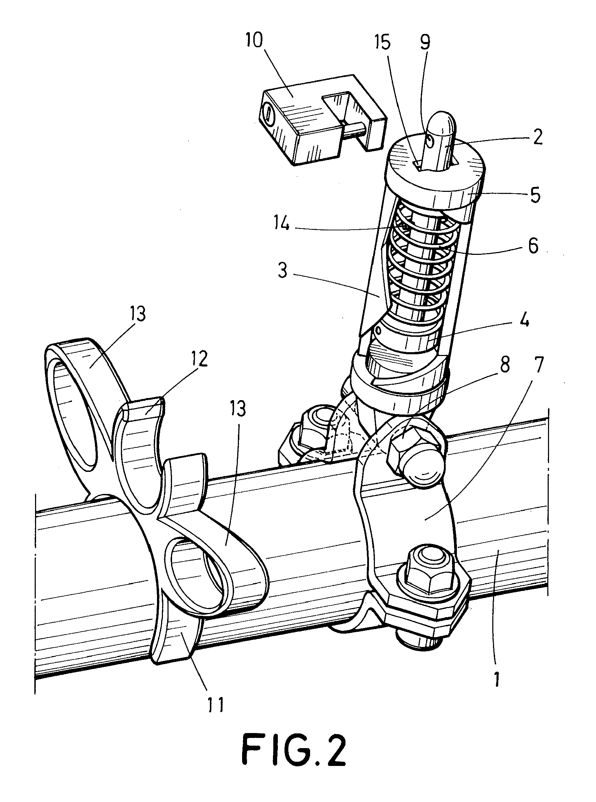

Figure 2 shows the components of the support device of the present invention. Said support element comprises a rod 2 housed inside the body 3. According to the position shown in Figure 2, the rod 2 comprises a piston 4 at its lower end, whereas the body 3 comprises an upper cover 5 provided with a hole through which the upper end of said rod 2 passes.

A coil spring 6 is placed between said piston 4 and said upper cover 5, and around said rod 2. This spring 6 allows said rod 2 to be extensible inside said body 3, the assembly of the body 3 being able to be lengthened and the rod 2 being able to be extended to the desired length to adapt to helmets having different lengths.

Said body 3 is attached to the frame 1 by means of the clamp 7 coupled to the frame 1 and a pivot shaft 8 coupled to the body 3. Said pivot shaft 8 is in turn attached to the clamp 7 by means of screws, as can be seen in the drawing.

The rod 2 comprises a hole 9 at its end farthest away from said frame 1 for the detachable coupling of a locking element 10, such as a lock. As is conventional, said lock can be unlocked or locked by means of a key to prevent it from an unauthorized unlocking.

The support device of the present invention also comprises the anchor element 11 placed at a distance from the clamp 7 to achieve optimal securing of the helmet. Said anchor element 11 comprises a central housing 12 for the coupling of said body 3 and side projections 13 for being in contact with the inner surface of the helmet.

Said Figure 2 shows the use position of the support device of the present invention, in which the rod 2 is placed in a substantially perpendicular position with respect to said frame 1. In turn, Figure 1 shows the rest position of the support device of the present invention, in which said rod 2 is placed longitudinally on said frame 1.

The process for securing the helmet to the bicycle by means of the support device of the present invention is described below.

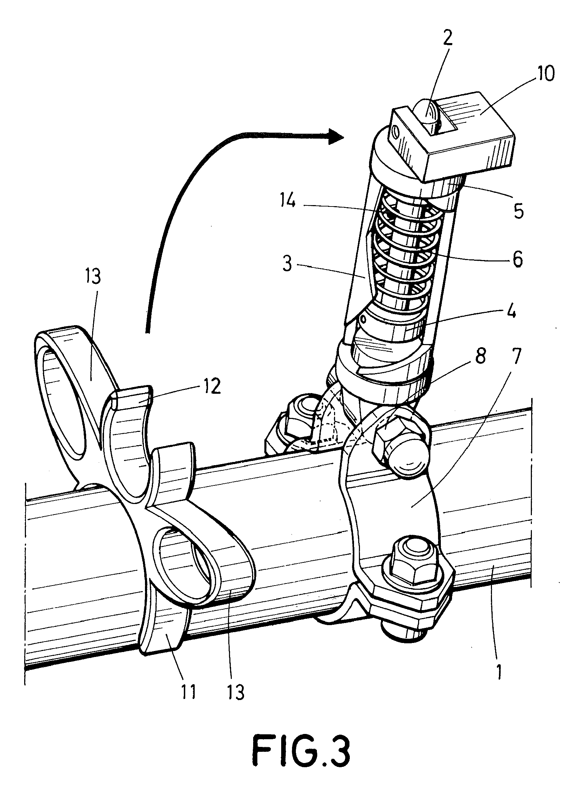

First the body 3, and therefore the rod 2, must be pivoted from the rest position depicted in Figure 1 to the use position depicted in Figure 3. It must be indicated that in the rest position the locking element 10 will preferably be coupled on the rod 2, such that its accidental loss is avoided and its availability at any time is assured. Said locking element 10 has furthermore been designed to facilitate said movement as it can be used like a handle.

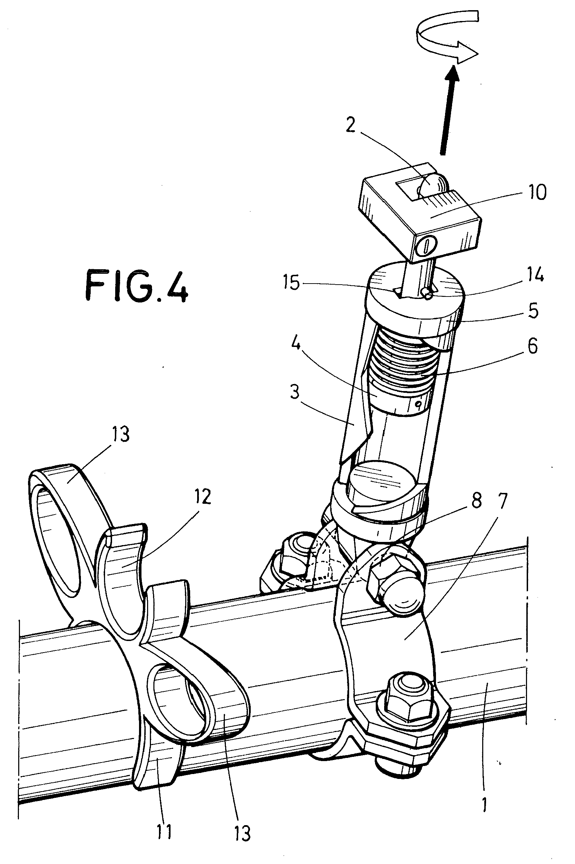

Then, as seen in Figure 4, the locking element 10 is pulled on until the rod 2 abuts the upper cover 5, exerting a force to compress the coil spring 6. Furthermore, by means of the locking element 10 itself, the rod 2 is made to turn until matching up a guiding pin 14 envisaged in the rod 2 with a guiding groove 15 envisaged in said upper cover 5 and ultimately extending the rod 2. By slightly turning the rod 2, it is locked in its maximum extension, in which position the locking element 10 is removed.

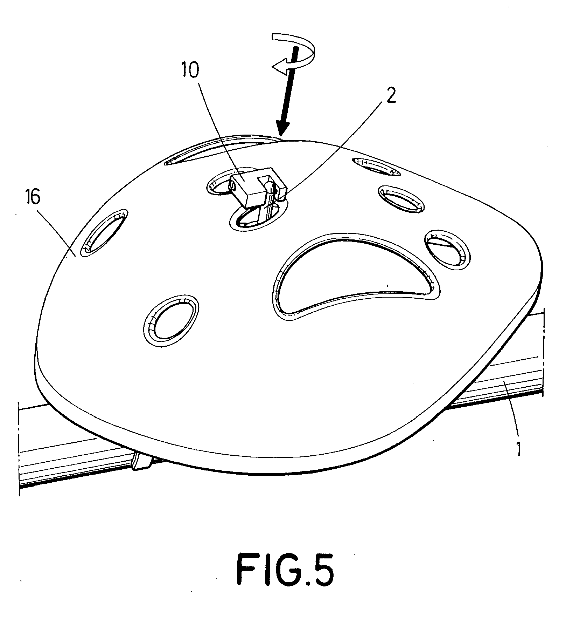

Finally, as can be seen in Figure 5, the rod 2 is introduced through any ventilation hole of the helmet 16 and is placed on the frame 1. Next the locking element 10 is placed in its position at the end of said rod 2.

When turning the rod 2 by means of the locking element 10, the guiding pin 14 is matched up with the guiding groove 15, such that the spring acts by exerting pressure between the helmet and the frame 1. The helmet is thus locked and immobilized.

Despite having made reference to a specific embodiment of the invention, it is evident for a person skilled in the art that the described support device for helmets can be subjected to a number of variations and modifications, and that all the mentioned details can be replaced with other technically equivalent details without departing from the scope of protection defined by the attached claims.

## Claims

1. Support device for helmets, comprising a locking element (10) fixing a helmet on a frame (1),
**characterized in that** it comprises a rod (2) assembled in an articulated manner in the frame (1), said locking element (10) being coupled at the end of said rod (2) farthest away from the frame (1), and **in that** said rod (2) can pivot with respect to the frame (1) between:
- a use position, in which said rod (2) is in a substantially perpendicular position with respect to the frame (1), and
- a rest position, in which said rod (2) is placed longitudinally on said frame (1).

2. Support device for helmets according to claim 1, wherein said rod (2) is housed in a longitudinally sliding manner inside a body (3).

3. Support device for helmets according to claim 2, wherein said rod (2) comprises a piston (4) at its end closest to the frame (1) and said body (3) comprises an upper cover (5) provided with a hole for the passage of said rod (2), a spring (6) being arranged around said rod (2) between said piston (4) and said upper cover (5).

4. Support device for helmets according to claim 1, also comprising an anchor element (11) for securing the helmet in combination with said locking element (10).

5. Support device for helmets according to claims 2 and 4, wherein said anchor element (11) comprises a housing (12) for said body (3) when it is placed in its rest position.

6. Support device for helmets according to claim 4 or 5, wherein said anchor element (11) comprises side projections (13) for being in contact with the inner surface of the helmet.

7. Support device for helmets according to claim 2, wherein said rod (2) is attached to the frame (1) by means of a clamp (7) coupled to the frame (1) and a pivot shaft (8) coupled to an end of said body (3).

8. Support device for helmets according to claim 1, wherein said locking element (10) is housed in a hole (9) envisaged at the end of the rod (2) farthest away from the frame (1).

9. Support device for helmets according to claim 3, wherein said rod (2) comprises a guiding pin (14) that is coupled with a guiding groove (15) envisaged in said upper cover (5).
